# EUROPEAN PATENT APPLICATION

(11) **EP 4 636 514 A1**
(43) Date of publication of application: **22.10.2025**
(21) Application number: 24171401.3
(22) Date of filing: 19.04.2024
(51) Int. Cl.: G05B 19/042, G05B 19/05

(54) **METHOD AND SYSTEM FOR OPERATING AN INDUSTRIAL AUTOMATION COMPONENT WITH A MOBILE DEVICE**

(71) Applicant: Siemens Aktiengesellschaft, 80333 München (DE)
(72) Inventor: Karklins, Gregory J., Johnson City, 37601 (US)
(74) Representative: Siemens Patent Attorneys

(57) **Abstract**

The invention relates to a method and system of operating an industrial automation component (PLC), in particular a programmable logic controller, with a mobile device (MD), in particular a smartphone or a tablet computer, wherein the mobile device (MD) exchanges data with the automation component (PLC) by means of a NFC communication in a close vicinity (DIST). In a first step, the mobile device (MD) is introduced into the vicinity (DIST), whereby initial data, in particular including identity information of the automation component (PLC), is transferred from a NFC communication module (NFT) of the automation component (PLC) to the mobile device (MD). In a second step, based on the first data on the mobile device (MD), a customized user interface for entering or modifying parameters or commands for the automation component (PLC) is configured and displayed on the screen of the mobile device (MD). In a third step, a user enters or changes, via the user interface, the parameters or commands. In a fourth step, the mobile device (MD) is re-inserted into the vicinity (DIST), whereby second data relating to or comprising at least the parameters or commands entered or changed are transmitted from the mobile device (MD) to the NFC communication module (NFT) of the automation component (PLC). Finally, in a fifth step, the parameters or commands received with the second data are checked and applied by the automation component (PLC). This method provides easy and secure access from a mobile device (MD) to an industrial automation component (PLC) for configuration, operation, and control.

## Description

The invention relates to a method and an arrangement, in particular a combination of a mobile device such as a smartphone and a radio module for operating, for operating and observing of an industrial automation component, particularly a programmable logic controller. Mainly, the mobile device is to be used for basic operations on-site or on-premise, for example as a local supplement to an existing HMI (Human Machine Interface) system.

In principle, the operation of industrial automation components using mobile devices such as smartphones or tablet computers is already known in the art. For example, many well-known approaches use a Bluetooth connection between the mobile device and the automation component, or they use an Intranet / Internet connection of the mobile device to access the automation network and thus indirectly the automation component.

However, the known procedures have some inconveniences, especially with regard to the previously necessary configuration of both the mobile device and the automation component. It is therefore necessary to ensure that the mobile device addresses the right one of a variety of automation components, which must be done by way of configuration and the like.

In addition, in many applications, it is required that the operator is in the immediate vicinity of the system to be operated and thus the automation component to be operated. However, depending on the range, which is several meters for Bluetooth connections and is practically unlimited when accessing via an Intranet or the Internet, this can hardly be ensured with the known technical means.

It is therefore a topic of the present invention to propose an easy-to-use method and technical system for controlling and operating an industrial automation component, whereby few or no manual configuration steps are necessary to initiate control operations and where confusion of different components is unlikely.

It is a core idea of the solution of this problem according to the invention to provide a radio module for NFC communication in the programmable logic controllers or in general in industrial automation components to be controlled and to access the automation component via this radio module by means of a mobile device. Communication via NFC (Nearfield Communication) is a magnetic field-based type of transmission with a comparatively short transmission range, so that the proximity between the mobile device and the automation component alone ensures that only the intended component is served. The method according to the invention provides for a 2-part communication cycle, whereby between the 1st access cycle and the 2nd access cycle the mobile device can be removed from the transmission range or distance, which is usually in the range of a few centimeters at maximum, which simplifies the operation of the mobile device. In addition, according to the invention, it is intended that the information required for operation, communication and access is read out of the automation component in the first cycle via NFC communication, whereby the user interface of the mobile device can adapt in a fully automatic procedure to the device that is specifically controlled or operated in this way, i.e. the automation component or PLC.

In particular, the problem is solved by the method according to claim 1, the automation component according to claim 7, and by the computer program or computer program product according to claim 9.

In particular, the task of the invention is solved by method of operating an industrial automation component, in particular a programmable logic controller, with a mobile device, in particular a smartphone or a tablet computer, wherein the mobile device exchanges data with the automation component by means of a NFC communication in a close vicinity. The method comprises several steps. In a first step, the mobile device is introduced into the vicinity, whereby initial data, in particular including identity information of the automation component, is transferred from a NFC communication module of the automation component to the mobile device. In a second step, based on the first data on the mobile device, a customized user interface for entering or modifying parameters or commands for the automation component is configured and displayed on the screen of the mobile device. In a third step, a user enters or changes, via the user interface, the parameters, or commands. In a fourth step, the mobile device is re-inserted into the vicinity, whereby second data relating to or comprising at least the parameters or commands entered or changed are transmitted from the mobile device to the NFC communication module of the automation component. Finally, in a fifth step, the parameters or commands received with the second data are checked and applied by the automation component. This method provides easy and secure access from a mobile device to an industrial automation component for configuration, operation, and control.

The task is also solved by an automation component for control of an industrial process or for control of an industrial production, wherein the automation component is equipped with a radio module for the exchange of data by means of NFC communication with a mobile device in a vicinity of the automation component. The automation component is set up for being operated by means of the mobile device in the method as described before. The solution also given by a computer program product for a mobile device for operating an industrial automation component. While being executed by the mobile device, the computer program product is set up to operate the automation component in the method according to described method. Accordingly, both, system and software (Computer program, "app"), are set up for conducting the method steps as described before and achieve the same advantages.

Advantageous embodiments are given by the features of the dependent claims. The advantageous features can be realized individually as well as in a sensible combination with each other. The advantageous embodiments of the process also apply mutatis mutandis to the advantageous device and the computer program product, and vice versa.

In an embodiment, the first data contains type information about the automation component, and in the second step a template for the user interface of the automation component is read from a library of the mobile device or from a cloud storage on the basis of the type information and used to configure the user interface. Thus, automatic configuration is possible without user interaction. In general, it is also possible to have a generic layout of the user interface in the mobile device, the generic layout being adapted to display and to edit all data fields offered by the automation component. This generic layout can be used in case no specific layout is available.

Advantageously, the first data includes, as identity information, a unique serial number of the automation component, and this serial number is transmitted with the second data, and, in the fifth step, the correspondence of the serial number from the second data with the serial number of the automation component is checked and, if there is a disagreement, the second data is discarded. This ensures that changes to parameters and orders etc. are applied to the same entity which has been contacted before.

Although relevant data of the automation component, in particular status information and current operating parameters, are temporarily stored in the non-volatile memory of the radio module, the actual, current information should be used directly from the CPU or the variable memory of the automation component whenever possible. For this reason, it is advantageous to distinguish whether the control part of the automation component is active during access, i.e. supplied with power, or not. Only in the latter case the cached values of the non-volatile memory of the radio module should be employed. Accordingly, if, in the first step, in a case in which the automation component is active, the first data is read directly from a control module of the automation component and transmitted to the mobile device with the first data, and that in a case in which the automation component is passive in the first step, the first data is read from a memory of the radio module ("use of buffered data").

In the fifth step, at least in a case in which these parameters have been changed in the third step, these changed parameters are inserted in the second data and transmitted back to the automation component. However, if - in the fourth step - the automation component is not active, the second data may temporarily be stored in a memory of the radio module and applied when the automation component is switched to an active mode (powered mode). However, this feature of buffering the to-be-applied data can be switched on or off depending on safety reasons. In "buffering off mode" it can be avoided to apply outdated data, parameters or orders.

The radio module comprises a non-volatile memory that can be read and written both by a control module of the automation component and via NFC communication. In advantageous designs, this memory is an EEPROM memory module.

An embodiment of the method according to the invention is explained below on the basis of the drawings. At the same time, it serves to explain an arrangement according to the invention, and a computer program according to the invention. In the drawings,
- Figure 1: shows a schematic representation of an arrangement of a mobile device and an automation component with a radio module, and
- Figure 2 (2a, 2b): shows a decision tree about the functions available to a user or customer on the user interface of his mobile device.

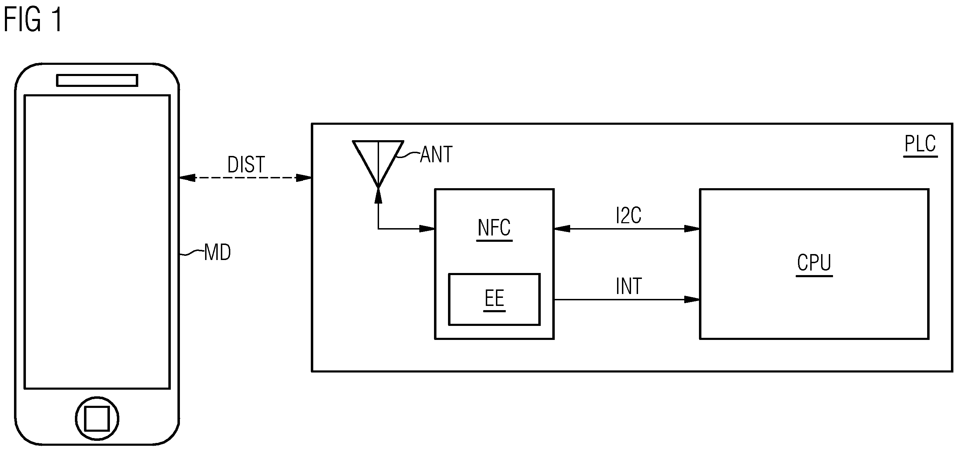

Figure 1 shows as a mobile device MD a mobile phone that is in close proximity DIST to an automation component PLC and whereby, in the case where the mobile device is within a wireless range, data exchange can take place between the mobile device MD and the automation component PLC by means of nearfield communication. The automation component PLC essentially comprises a microprocessor-controlled execution unit CPU for automation programs, i.e. a classic control component, and a radio module NFC for nearfield communication, which is equipped with a non-volatile memory EE (EEPROM memory). The radio module includes an antenna ANT and is connected to the control unit via a data bus I2C. Furthermore, an output INT with an activation signal from the radio module is connected to the control unit CPU, which informs the control unit CPU e.g. about the presence of (new) data or about the presence of a mobile device MD within the radio range. In accordance with an optional embodiment of the invention, this signal INT can also be used to activate a possibly inactive control unit CPU (wake-up).

The automation component (PLC; CPU) supports NFC communications with the mobile device MD, in particular a mobile iPhone^{™} or Android^{™} app. Each automation component PLC contains the NFC communication module (including a nearfield radio module), e.g. a STMicroelectronics NFC Type 5 tag compatible with the ISO 15693 standard (part number ST25DV64KC). This tag features an I2C interface, an RF (radio frequency) interface, and a 64 Kbit (8 Kbyte) EEPROM.

Data transfers (scans) are performed when the mobile device' (later called "phone") application (computer program, "app") is "Ready to scan" by holding the phone within 10 cm of the NFC antenna on the front of the PLC or CPU. The ability to scan a CPU through pack material is supported. "Scan" is short term for exchanging data between the NFC communication module (radio module) and the CPU (the control module of the automation component / PLC).

Scan functions include:
- Read general CPU information (article number, serial number, firmware version, etc.)
- Read module information (slot, device type, status, etc.)
- Perform basic commissioning of the CPU (change operating mode, Set clock, etc.)
- Read and write data that the CPU program is using
- Obtain CPU diagnostics

The CPU firmware interacts with the tag using the I2C interface, while the mobile device MD (e.g., iPhone) interacts with the tag using the radio frequency (RF) interface. The CPU supports both NFC Active (CPU has power) and NFC passive (non-active or passive mode; CPU has no power; tag in PLC is powered wirelessly by the nearby iPhone). While the CPU is in passive mode, the NFC feature set is be reduced. Typically, the automation component (PLC; CPU) will be powered resulting in NFC active mode.

When the automation component (PLC; CPU) is powered on (active mode), Fast Transfer mode is always be used by the NFC mobile application. When the PLC's CPU is powered off, the NFC mobile application uses the RF interface following the ISO/IEC 15693 or NFC Type 5 Tag recommendations.

The automation component (PLC) firmware uses the GPO ("general purpose output") pin (here called interrupt signal - INT) of the Tag to know when RF signal is detected, RF activity is in progress, and when a message is available in the Mailbox (non-volatile EEPROM memory of the NFC module) from a Fast Transfer. The GPO pin (INT signal) information is used to know when an iPhone or the like is near the Tag or is already in the process of reading or writing to the Tag (NFC radio module).

The CPU configures the EEPROM for use on the initial powerup. On subsequent powerups, the CPU may verify if the EEPROM data are correct. If the data are not correct, the CPU can recreate and rewrite the data. The content of the EEPROM shall only be updated by the CPU firmware using the I2C interface; updates via the RF interface shall be disabled.

The NFC application on the mobile device MD shall feature write protection using a password. The password shall be sent as a concatenated salt + salted hash byte array to the automation component PLC. When write protection is enabled and a write command is issued, the password must be supplied, and it must match the password in the CPU. Otherwise, the CPU shall reject the write command.

Only one tag communication channel can be open/active at a time: I2C for firmware use (to/from the control unit CPU) or RF for phone use (via NFC radio module). In the event of a conflict, the CPU firmware shall retry the communication.

The basic idea is using Near Field Communications (NFC) to make it easier for the customer / user to interact with the PLC using just their mobile device MD (phone or tablet). The customer can (using a mobile phone application), initiate either a NFC read or write and simply position the phone a few centimeters (in a vicinity / NFC communication distance DIST) from the PLC and the read or write will occur. The read transaction can be performed with the PLC either powered on or off. However, all writes must have the PLC powered on for the PLC to accept the new data (but in some use cases buffering of written data in the EEPROM may be allowed). Reading and writing can be protected with a password if should the customer wish to do so.

NFC does not require an ethernet connection to connect to the PLC, this is done wirelessly using NFC.

To gather simple information or make a simple change to the PLC, the customer currently must connect with the PLC programming software or web browser via personal computer to be able to interact with the PLC. Connecting a computer to the PLC requires an ethernet connection which may not be present or easily accessible. It can also be time consuming to launch the programming package and connect via ethernet.

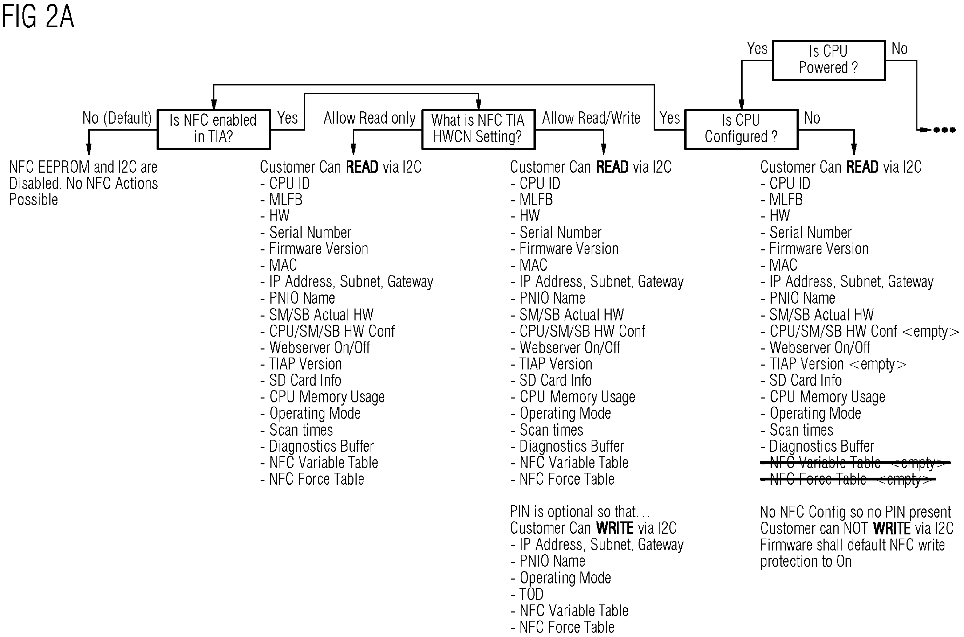

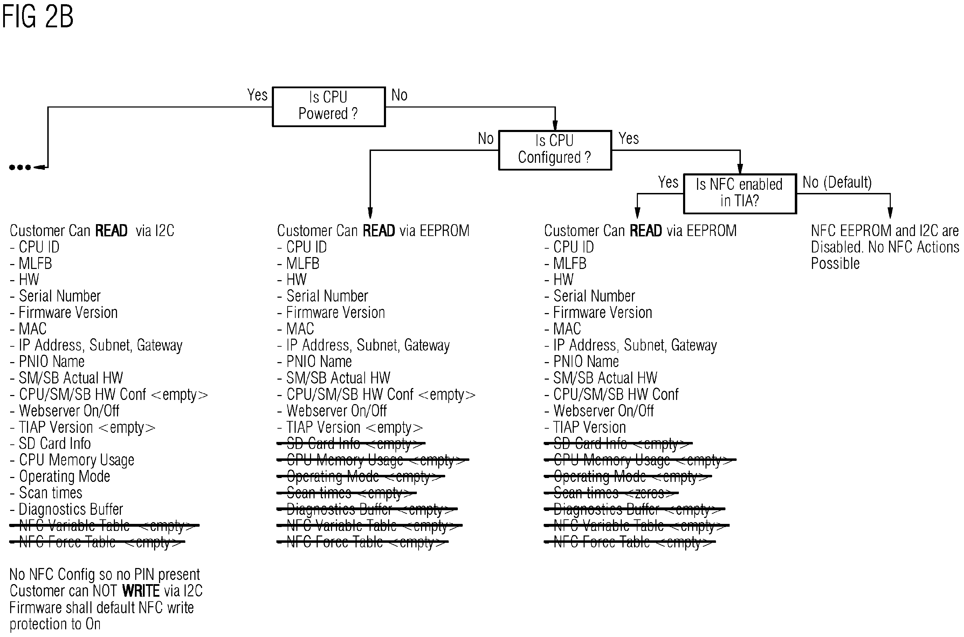

With NFC integrated into the PLC (Figure 1), the customer can easily obtain information from the PLC (with power OFF and with power ON). The functions that can be performed are shown in the "NFC Decision Tree" image in Fig 2a and 2b - the tree image is spread on two pages of the drawings for better display. When the customer brings their mobile phone in a close (~1-2 cm) distance DIST to the front of the PLC, then the PLC will communicate with the phone MD. This allows the mobile phone to read/write data to the PLC. The customer can easily use their mobile phone and a PLC vendor provided mobile application and initiate a wireless NFC connection to the PLC.

Figure 2 shows the decision tree, which decides which access and configuration options a user / customer has depending on the current operating state of the automation component PLC and depending of configuration status of the PLC, the latter preferably determined by a (not shown) engineering system (i.e., TIA portal of Siemens). The decision tree also decides what information (identity information, address data, parameters, switches, lists, variables, debug data or the like) is transmitted to and displayed on a mobile device MD. In the 1st part of Figure 2, Figure 2a, cases are shown in which a control part of the CPU of the automation component is active, i.e. is supplied with power ("Powered" mode). Part 2 of Figure 2, shown as Figure 2b, shows the cases in which the CPU control unit is inactive, i.e. not supplied with power ("unpowered" mode). Those data fields and parameters that are not available in the respective operating state are shown in strikethrough in the decision tree. The names of the data fields shown are specific to the TIA engineering system ("Totally Integrated Automation") from the manufacturer Siemens; for other manufacturers or device types, the data fields, parameters, and functions may also have different names without deriving from the spirit of the invention.

In the decision tree picture, the following examples of parameters or key words may have the corresponding meaning:
- CPU ID: Serial number of the processing unit
- MLFB: Type information in vendor's product catalog
- HW: Hardware identification
- Serial Number: Identity information of the PLC
- Firmware Version: Firmware software release number
- MAC: Hardware address of network interface
- IP Address, Subnet, Gateway: Network address
- PNIO Name: Profinet Network Identifier
- Webserver On/Off: Control for switching internal Web Server on/off
- TIAP Version: Version number of Engineering System
- SD Card Info: Information of connected memory card
- CPU Memory Usage: Used system memory (percent or absolute number)
- NFC Variable Table: Table of parameters for access via NFC

Other automation components may have different parameters; however Identity Information (Serial Number or CPU ID) is needed to have a correlation between the information read in the first cycle and the data transferred (written) in the second cycle. As an alternative, this correlation can be achieved by using token, signatures or session IDs.

In the two-step or two-cycle approach of the instant invention, the first step is to perform a "NFC read", this will pull the PLC information that the mobile application can display. One critical piece of information is the PLC serial number. This is unique for every PLC manufactured and it is used in subsequent NFC writes to be sure that the write is connecting to the PLC shown on the mobile applications screen. Subsequent NFC reads can be done to "refresh" the PLC data. The type information of the CPU / PLC and, optionally, of connected modules like I/O-modules is used, on the mobile device MD, to chose the right layout or template for creating the unser interface. If no suitable template is found in the mobile device' memory, such information can be looked up in a cloud store or server or app-store or internet database. As a fallback, a locally stored generic layout or template can be used, providing some kind of basic functionality.

To write data using NFC there is a second step of the 2-step- or 2-cycle process. First, a read must be performed to identify the CPU (1^{st} cycle) e.g. by means of the serial number, and then a second user-initiated NFC write can be done (2^{nd} cycle). Each cycle, particularly the 1^{st} cycle, may consist of two or more sub cycles in case that in a first sub cycle basic information (e.g. Identity or Address information) is read, and then in further sub cycles detailed information, e.g. debug information or automation parameter lists, is obtained.

The serial number is used on the NFC write to verify the PLC. The reason for this 2-step process is to ensure the NFC write is occurring to the same PLC identified or shown on the mobile applications screen. The two-cycle approach makes it possible to remove the mobile device from the reading distance in-between. This is not only a comfort feature, but it allows to easily determine the time for writing parameters etc. to the automation component PLC by just approaching the automation component PLC with the mobile device MD.

This invention has the following improvements over existing solutions:
- Mobile phone access to PLC identification data.
- Mobile phone access to diagnostic data.
- Mobile phone access to read PLC data variables that control the manufacturing process.
- Mobile phone access to write data variables that control the manufacturing process.
- Mobile phone access to change the operating mode of the CPU from RUN to STOP or STOP to RUN.
- Using the mobile phone a customer can now browse PLC data simply with a flick of their finger to scroll the large data set. A significant ease-of-use improvement over any front panel displays in existing PLCs.
- Mobile phone access, and historical record and saving PLC data for 100s of NFC scanned PLCs. This data can then be accessed and analyzed later back in the office if necessary.
- Mobile phone access to write the IP suite to correct any computer connection problems via ethernet.
- Mobile phone access can be configured: blocked, read-only, read-write, or read-write but with a password.

## Claims

1. A method of operating an industrial automation component (PLC), in particular a programmable logic controller, with a mobile device (MD), in particular a smartphone or a tablet computer,
wherein the mobile device (MD) exchanges data with the automation component (PLC) by means of a NFC communication in a close vicinity (DIST),
**characterized in**
**that**, in a first step, the mobile device (MD) is introduced into the vicinity (DIST), whereby initial data, in particular including identity information of the automation component (PLC), is transferred from a NFC communication module (NFT) of the automation component (PLC) to the mobile device (MD),
**that**, in a second step, based on the first data on the mobile device (MD), a customized user interface for entering or modifying parameters or commands for the automation component (PLC) is configured and displayed on the screen of the mobile device (MD), that, in a third step, a user enters or changes, via the user interface, the parameters or commands,
**that**, in a fourth step, the mobile device (MD) is re-inserted into the vicinity (DIST), whereby second data relating to or comprising at least the parameters or commands entered or changed are transmitted from the mobile device (MD) to the NFC communication module (NFT) of the automation component (PLC), and
**that**, in a fifth step, the parameters or commands received with the second data are checked and applied by the automation component (PLC).

2. The method according to claim 1,
**characterized in**
**that** the first data contains type information about the automation component (PLC), and that in the second step a template for the user interface of the automation component (PLC) is read from a library of the mobile device (MD) or from a cloud storage on the basis of the type information and used to configure the user interface.

3. A method according to one of the preceding claims,
**characterized in**
**that** the first data as identity information include a unique serial number of the automation component (PLC), that this serial number is transmitted with the second data, and
**that**, in the fifth step the correspondence of the serial number from the second data with the serial number of the automation component (PLC) is checked and, if there is a disagreement, the second data is discarded.

4. A method according to one of the preceding claims,
**characterized in**
**that**, in the first step, in the case in which the automation component (PLC) is active, the actual parameters of the automation component (PLC) are transmitted to the mobile device (MD) with the first data, that these actual parameters are displayed in the second step by means of the user interface, and,
in the fifth step, at least in a case in which these parameters have been changed in the third step, these changed parameters are inserted in the second data and transmitted back to the automation component (PLC).

5. A method according to one of the preceding claims,
**characterized in**
**that**, in the fourth step, in a case in which the automation component (PLC) is not active, the second data is temporarily stored in a memory (EE) of the radio module and applied when the automation component (PLC) is switched to an active mode.

6. A method according to one of the preceding claims,
**characterized in**
**that**, in the first step, in a case in which the automation component (PLC) is active, the first data is read directly from a control module (CPU) of the automation component (PLC), and that in a case in which the automation component (PLC) is passive in the first step, the first data is read from a memory (EE) of the radio module.

7. An automation component (PLC) for control of an industrial process or for control of an industrial production,
wherein the automation component (PLC) is equipped with a radio module for the exchange of data by means of NFC communication with a mobile device (MD) in a vicinity (DIST) of the automation component (PLC),
**characterized in**
**that** the automation component (PLC) is set up for being operated by means of the mobile device (MD) in the method of claim 1.

8. The automation component (PLC) according to claim 7,
**characterized in**
**that** the radio module comprises a non-volatile memory (EE) that can be read and written both by a control module (CPU) of the automation component (PLC) and via NFC communication.

9. A computer program product for a mobile device (MD) for operating an industrial automation component (PLC),
**characterized in**
**that**, while being executed by the mobile device (MD), the computer program product is set up to operate the automation component (PLC) in the method according to claim 1.
